# EUROPEAN PATENT APPLICATION

(11) **EP 4 324 583 A2**
(43) Date of publication of application: **21.02.2024**
(21) Application number: 24150632.8
(22) Date of filing: 22.04.2019
(51) Int. Cl.: B23D 45/16, B23D 61/06, B25F 5/00

(54) **COMPACT MULTI-MATERIAL CUT-OFF TOOL**

(30) Priority: 27.04.2018 US 201862663403 P; 23.05.2018 US 201862675236 P
(62) Divisional of application: 19793663.6
(71) Applicant: Milwaukee Electric Tool Corporation, Brookfield, WI 53005-2550 (US)
(72) Inventor: Owens, Patrick, Milwaukee, 53202 (US); Schwab, Derek J., Milwaukee, 53212 (US); Derksen, Christopher, Hartland, 53029 (US); Kelley, Sean, Wauwatosa, 53226 (US); Gainacopulos, Nikos A., Milwaukee, 53211 (US)
(74) Representative: Marks & Clerk LLP

(57) **Abstract**

There is provided a cut-off tool comprising: a housing, an arbor, a cutting disk, a blade guard, a retaining clip and a detent mechanism. The arbor is supported by the housing for relative movement therewith. The cutting disk is attachable to the arbor. The blade guard surrounds an upper portion of the cutting disk. The retaining clip secures the blade guard to the housing. The detent mechanism is between the blade guard and the retaining clip. The detent mechanism selectively holds the blade guard in one of a plurality of positions relative to the housing.

## Description

### CROSS-REFERENCE TO RELATED APPLICATIONS

This application claims priority to U.S. Provisional Patent Application No. 62/675,236 filed on May 23, 2018 and U.S. Provisional Patent Application No. 62/663,403 filed on April 27, 2018, the entire contents of both of which are incorporated herein by reference.

### FIELD OF THE INVENTION

The present invention relates to power tools, and more specifically to cut-off tools.

### BACKGROUND OF THE INVENTION

Cut-off tools, such as multi-material cut-off tools, typically include a blade guard at least partially surrounding a cutting disk of the cut-off tool.

### SUMMARY OF THE INVENTION

The present invention provides, in one aspect, a compact multi-material cut-off tool.

The present invention provides, in another aspect, a cut-off tool including a housing, an arbor supported by the housing for relative movement therewith, and a cutting disk attachable to the arbor. The cut-off tool further includes a motor coupled to the arbor to provide torque thereto, and a battery pack removably coupled to the housing. The battery pack is for providing power to the motor. The cut-off tool further includes a switch operable to adjust rotation of the motor between a first rotational direction and an opposite, second direction for selectively rotating the cutting disk in the first rotational direction or second rotational direction, respectively.

The present invention provides, in another aspect, a cut-off tool a housing, an arbor supported by the housing for relative movement therewith, and a cutting disk attachable to the arbor. The cut-off tool further includes a blade guard surrounding an upper portion of the cutting disk, a retaining clip securing the blade guard to the housing, and a detent mechanism between the blade guard and the retaining clip. The detent mechanism is for selectively holding the blade guard in one of a plurality of positions relative to the housing.

The present invention provides, in another aspect, a cut-off tool including a housing, an arbor supported by the housing for relative movement therewith, and a flange coupled for co-rotation with the arbor against which a cutting disk is clamped. The cut-off tool further includes an adapter ring coupled for co-rotation with the flange. An outer diameter of the adapter ring is nominally less than an inner diameter of an aperture in the cutting disk for aligning the cutting disk with the arbor.

Other features and aspects of the invention will become apparent by consideration of the detailed description and accompanying drawings.

### BRIEF DESCRIPTION OF THE DRAWINGS

FIG. 1 is a perspective view of a compact multi-material cut-off tool in accordance with an embodiment of the invention.
FIG. 2 is a side view of the cut-off tool of FIG. 1.
FIG. 3 is a cross-sectional view of the cut-off tool of FIG. 1, viewed along line 3-3 shown in FIG. 1.
FIG. 4 is a perspective view of a shroud of the cut-off tool of FIG. 1.
FIG. 5 is another perspective view of the shroud of FIG. 5.
FIG. 6 is a side view of the cut-off tool of FIG. 1 with the shroud of FIGS. 4 and 5 removed.
FIG. 7 is an enlarged cross-sectional view of the cut-off tool of FIG. 1 viewed along lines 3-3 in FIG. 1, illustrating an upper blade guard.
FIG. 8 is an exploded view of the upper blade guard of FIG. 7 and a detent mechanism.
FIG. 9 is a perspective view of an arbor of the cut-off tool of FIG. 1.
FIG. 10 is another perspective view of the cut-off tool of FIG. 1, including a vacuum attachment coupled to an exhaust port of the shroud of FIG. 4, the vacuum attachment illustrated in a first position.
FIG. 11 is another perspective view of the cut-off tool of FIG. 10, illustrating the vacuum attachment in a second position.
FIG. 12 is a cross-sectional view of a portion of the cut-off tool of FIG. 1, viewed along line 12-12 shown in FIG. 1.
FIG. 13 is a cutaway perspective view of the cut-off tool of FIG. 1, illustrating a forward/reverse selector shuttle.
FIG. 14 is a perspective view of the forward/reverse selector shuttle of FIG. 13.

Before any embodiments of the invention are explained in detail, it is to be understood that the invention is not limited in its application to the details of construction and the arrangement of components set forth in the following description or illustrated in the following drawings. The invention is capable of other embodiments and of being practiced or of being carried out in various ways. Also, it is to be understood that the phraseology and terminology used herein is for the purpose of description and should not be regarded as limiting.

### DETAILED DESCRIPTION

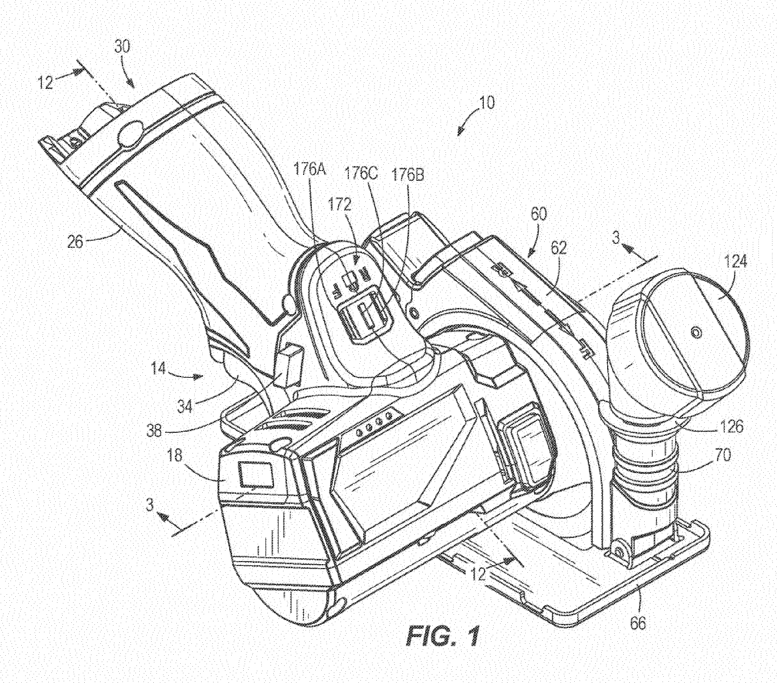

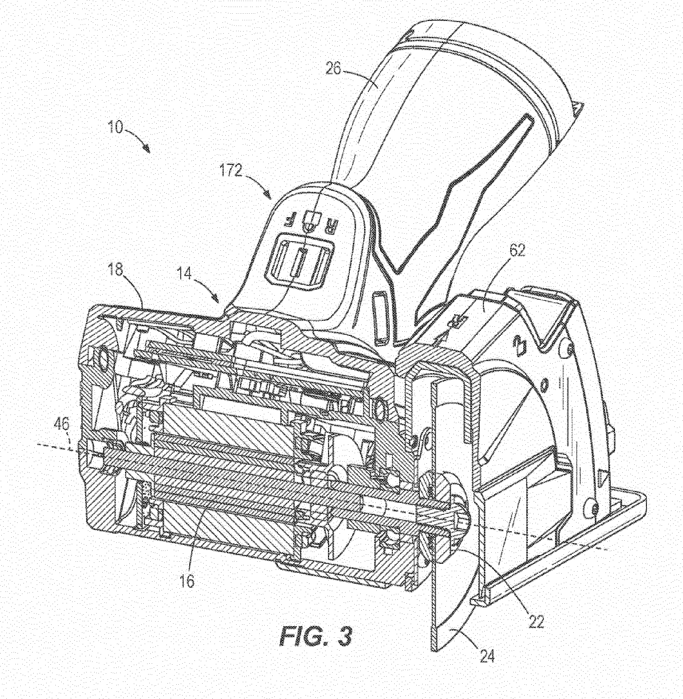

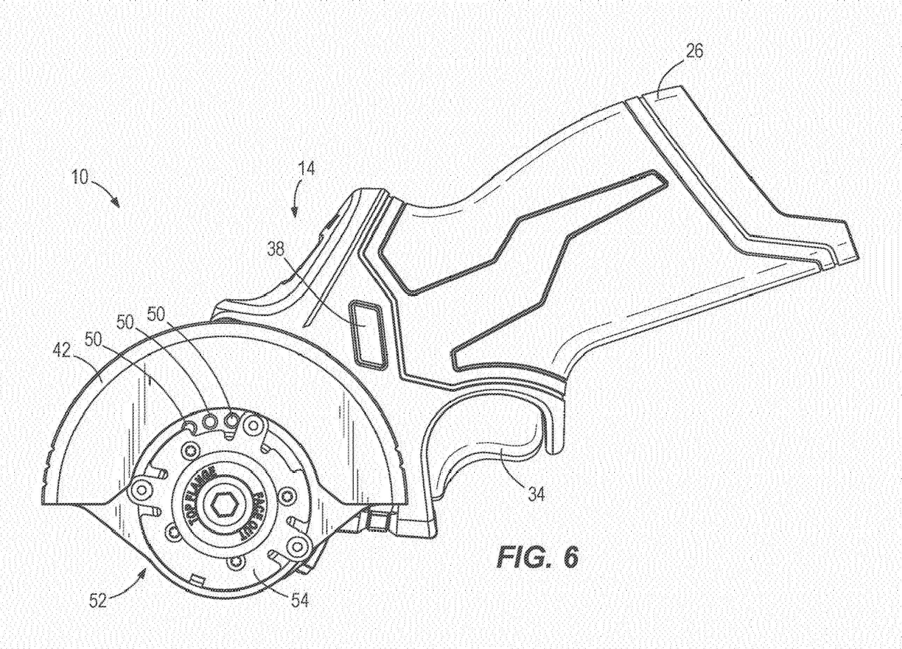

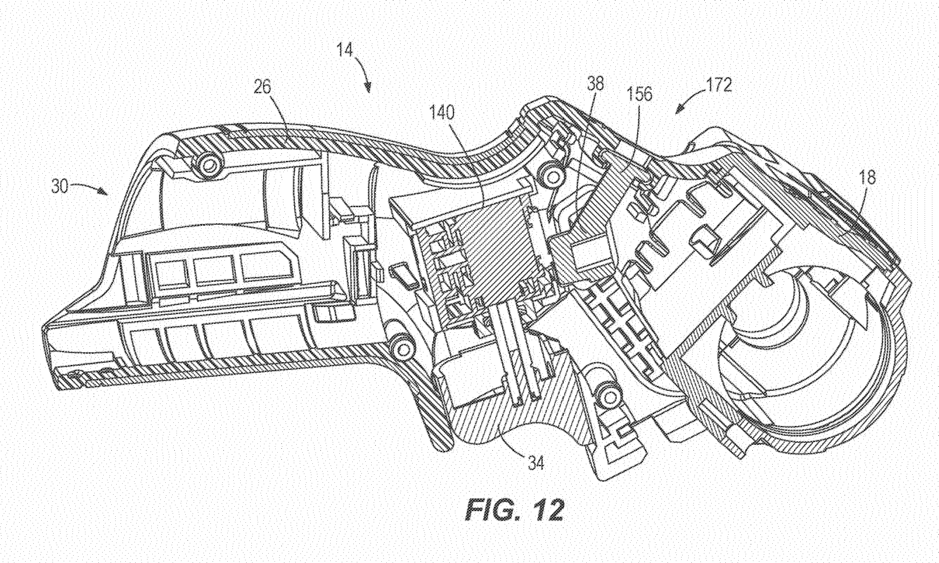

FIGS. 1-14 illustrate all or portions of a cut-off tool, such as a compact multi-material cut off tool 10. The cut-off tool 10 includes a housing 14, a motor 16 (FIG. 3) positioned within a motor housing portion 18 of the housing 14, and an arbor 22 driven by the motor 16 to which a small diameter (e.g., 3 inch) cutting or grinding disk (hereinafter, "cutting disk 24") is attachable. The housing 14 also includes a handle portion 26 extending transversely from the motor housing portion 18 and terminating in a receptacle 30 in which a battery pack (not shown) is received. The cut-off tool 10 also includes a trigger 34 (FIGS. 1 and 6) protruding from the handle portion 26 of the housing 14, permitting a user to grasp the handle portion 26 for maneuvering the cut-off tool 10 (without an auxiliary handle) while depressing the trigger 34 to activate the motor 16. The cut-off tool 10 further includes a forward/reverse selector shuttle 38 (FIG. 6) located adjacent the front of the handle portion 26 and forward of the trigger 34, permitting the user to select either a forward or reverse rotational direction of the motor 16 with their thumb, for example, while maintaining their grasp on the handle portion 26 with their index finger on the trigger 34.

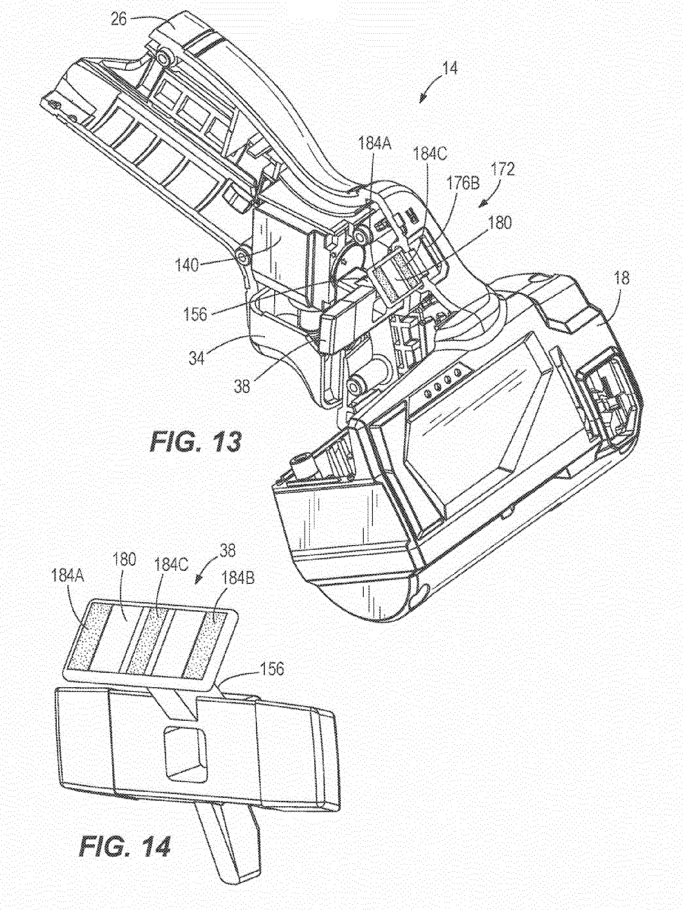

With reference to FIGS. 1 and 12-14, the trigger 34 and the forward/reverse selector shuttle 38 are connected to a combined motor activation/forward-reverse switch 140. The forward/reverse selector shuttle 38 includes an indicator portion 156 that is movable within the handle portion 26 of the housing 14, which includes a forward/reverse blade direction display window 172 (FIGS. 1 and 3). Specifically, the display window 172 is defined by first, second, and third slots 176A, 176B, 176C (FIG. 1). The first and second slots 176A, 176B are located proximate laterally opposite sides of the handle portion 26, and the third slot 176C is between the first and second slots 176A, 176B. The indicator portion 156 of the forward/reverse selector shuttle 38 includes a surface 180 in facing relationship with the first, second, and third slots 176A, 176B, 176C (FIGS. 13 and 14). The surface 180 includes first, second, and third sections 184A, 184B, 184C which include different colors (i.e., white) than the base color of the surface 180 (i.e., gray; FIG. 14). The first, second, and third sections 184A, 184B, 184C are spaced from each other on the surface 180. The third section 184C is between the first and second sections 184A, 184B. Furthermore, the display window 172 includes symbols to indicate to the user the rotational direction of the motor 16. The illustrated display window 172 includes the letter "F" positioned adjacent the first slot 176A, the letter "R" positioned adjacent the second slot 176B, and a padlock icon positioned adjacent the third slot 176C, and between the letter "F" and the letter "R" (FIG. 1). The letter "F" corresponds to a forward direction of the motor 16, the letter "R" corresponds to a reverse direction of the motor 16, and the padlock icon corresponds to a lockout position of the trigger 34 in which the motor 16 cannot be operated.

With continued reference to FIGS. 1 and 12-14, movement of the forward/reverse selector shuttle 38 adjusts the color scheme of the display window 172 to indicate the direction of the motor 16. Specifically, movement of the forward/reverse selector shuttle 38 positions the first, second, and third sections 184A, 184B, 184C relative to the first, second, and third slots 176A, 176B, 176C. For example, movement of the forward/reverse selector shuttle 38 to the right from the frame of reference of FIG. 13 aligns the second section 184B with the slot 176B, misaligns the first section 184A with the slot 176A, and misaligns the third section 184C with the third slot 176C, thereby indicating to the user that the rotational direction of the motor 16 is in a reverse direction. Likewise, movement of the forward/reverse selector shuttle 38 to the left from the frame of reference of FIG. 13 aligns the first section 184A with the first slot 176A, misaligns the second section 184B with the second slot 176B, and misaligns the third section 184C with the third slot 176C, thereby indicating to the user that the rotational direction of the motor 16 is in a forward direction. When the forward/reverse selector shuttle 38 is in a middle position (i.e., when the third section 184C is aligned with the third slot 176C, and the first and second sections 184A, 184B are misaligned with the first and second sections 184A, 184B, respectively), then the display window 172 indicates to the user that the trigger 34 cannot be operated, or in other words, that the cut-off tool 10 is "locked out". The user must adjust the forward/reverse selector shuttle 38 to one of the positions indicating forward or reverse direction of the motor 16 before the trigger 34 can be operated.

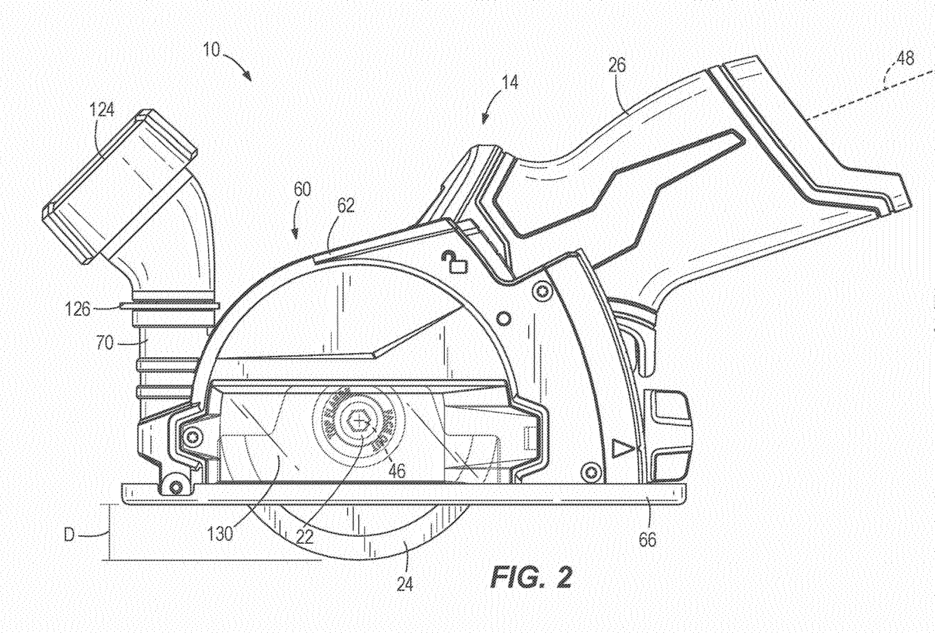

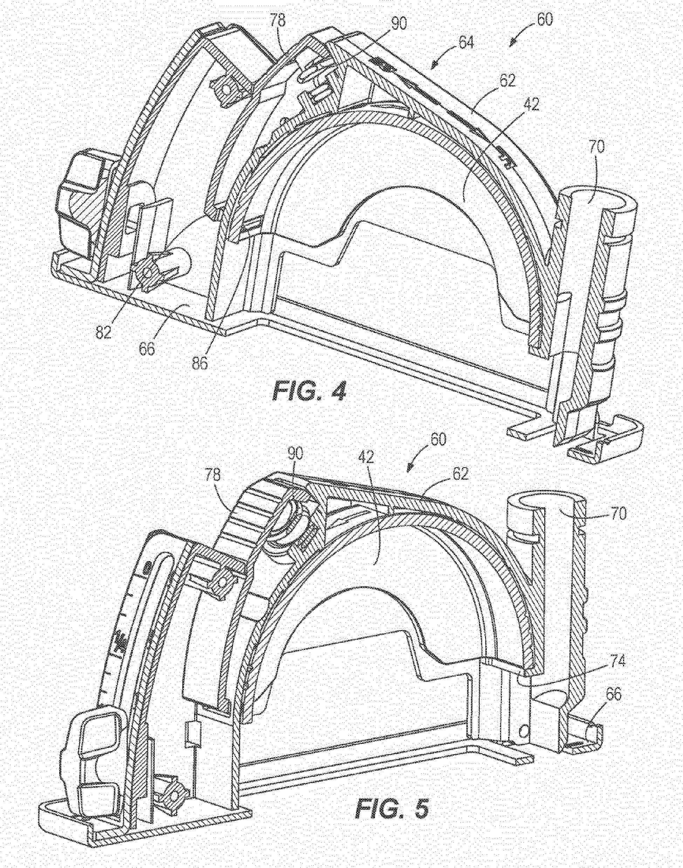

With reference to FIGS. 4 and 5, the cut-off tool 10 further includes a removable debris collection and shoe assembly 60, which includes a shroud 62 surrounding an upper blade guard 42 (FIG. 6), and an adjustable shoe 66 for sliding the cut-off tool 10 along a workpiece (FIGS. 4 and 5). The shoe 66 is pivotably attached to the shroud 62, permitting adjustment of a cutting depth D (FIG. 2) of the cutting disk 24. The shroud 62 includes an exhaust port 70 from which debris created during a workpiece cutting operation is discharged that is attachable to a vacuum source (not shown).

With reference to FIG. 4, the shroud 62 includes a forward/reverse blade direction indicator 64. The indicator 64 corresponds to the direction the motor 16 is driving the blade 24 that is determined by the forward/reverse selector switch 38. Furthermore, debris may be expelled from the exhaust port 70 and/or a vacuum attachment (as further discussed below) when the blade 24 is driven in a forward direction by the motor 16 and a reverse direction by the motor 16.

With continued reference to FIGS. 4 and 5, the assembly 60 also includes an interior flange 74 (FIG. 5) at the front of the shroud 62 engageable with a front edge of the upper blade guard 42, and a latch 78 at the rear of the shroud 62, which collectively retain the assembly 60 to the upper blade guard 42. The latch 78 is pivotably attached to the shroud 62, and includes a finger 82 (FIG. 4) that protrudes into a corresponding aperture 86 in the upper blade guard 42 when the latch 78 is moved to its biased position by a compression spring 90. Therefore, to remove the assembly 60 from the upper blade guard 42, the user needs only to pivot the latch 78 against the bias of the spring 90 to remove the finger 82 from the aperture 86. Thereafter, the user may lift the assembly 60 away from the upper blade guard 42.

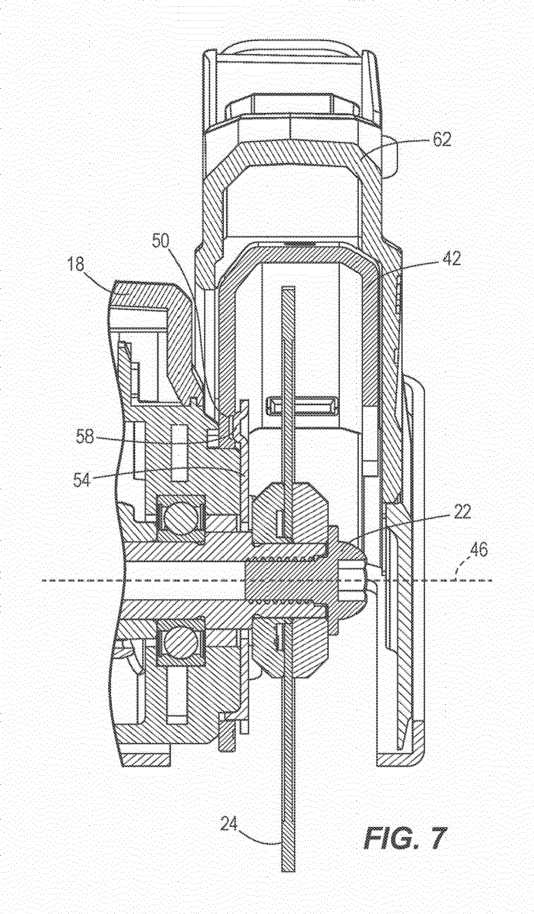

With reference to FIGS. 6-8, the tool 10 includes a retaining clip 54 axially securing the upper blade guard 42 to the housing 14 and a detent mechanism between the upper blade guard 42 and the retaining clip 54 for selectively holding the upper blade guard 42 in one of a plurality of positions relative to the housing 14. Particularly, the orientation of the upper blade guard 42 is adjustable relative to the motor housing portion 18 about a rotational axis 46 of the arbor 22 (FIG. 7). In the illustrated embodiment of the tool 10, the detent mechanism includes an array of detent recesses 50 (FIG. 6) defined in the upper blade guard 42 and a protrusion or spherical detent 58 formed on the retaining clip 54 (FIG. 7). The spherical detent 58 is receivable in any of the detent recesses 50 to maintain the upper blade guard 42 in the desired position. In other embodiments, the detent 58 may be formed on the upper blade guard 42 the recesses 50 may be defined in the retaining clip 54.

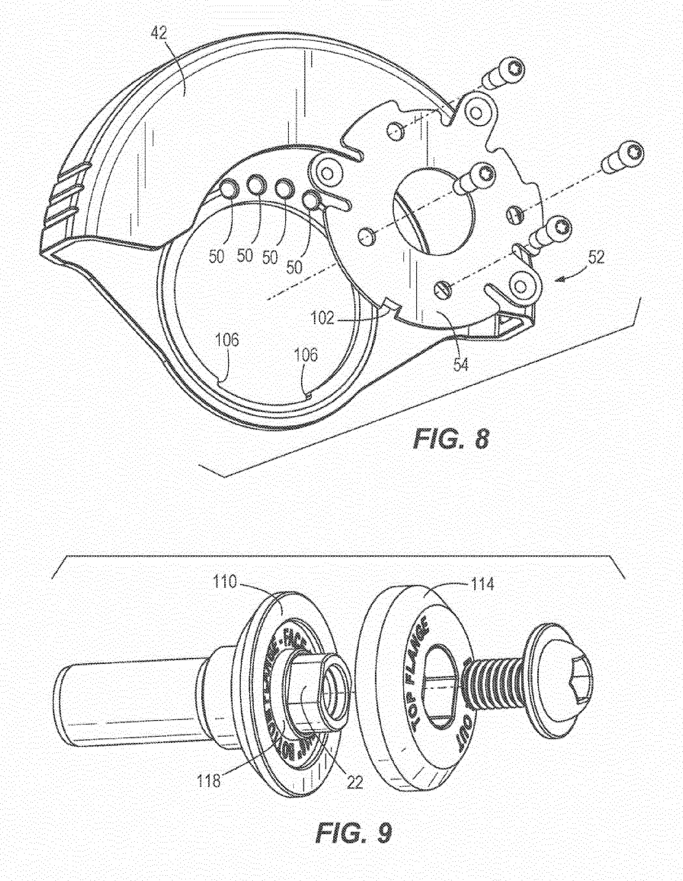

With continued reference to FIGS. 6-8, the retaining clip 54 further includes a stop 102 (FIG. 8) extending from a side of the retaining clip 54 and positioned between edges 106 of the upper blade guard 42. The stop 102 engages the edges 106 for inhibiting rotation of the upper blade guard 42 about the rotational axis 46 beyond the edges 106. Accordingly, the upper blade guard 42 is pivotable by 90 degrees about the rotational axis 46 to facilitate different cutting/grinding operations by the user. In addition, the retaining clip 54 of the detent mechanism 52 secures the upper blade guard 42 to the motor housing portion 18 (FIG. 6).

With reference to FIG. 9, the cut-off tool 10 also includes inner and outer flanges 110, 114 coupled for co-rotation with the arbor 22 between which the cutting disk 24 is clamped. A back side of the cutting disk 24 is positioned against the inner flange 110. The cutting disk 24 includes an aperture having an inner diameter nominally less than an outer diameter of the arbor 22. For example, FIG. 9 illustrates the arbor 22 having a 3/8 inch outer diameter for receiving cutting disks of a first size.

With continued reference to FIG. 9, the inner flange 110 further includes an adapter ring 118 integrally formed therewith. The adapter ring 118 has a 7/16 inch outer diameter for receiving cutting disks of a second size with a nominally larger inner diameter. Therefore, the adapter ring 118 may center a cutting disk 24 having a 7/16 inch nominal inner diameter on the flange 110 itself, rather than using the arbor 22 to center a cutting disk 24 having a 3/8 inch nominal inner diameter (FIG. 7). In some embodiments, the inner flange 110 does not include the adapter ring 118.

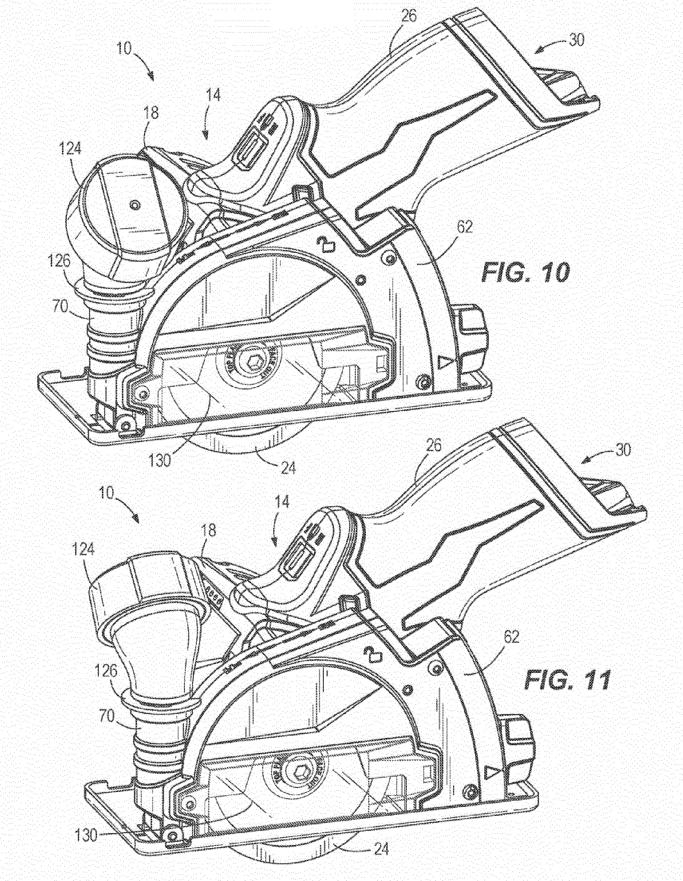

With reference to FIGS. 1, 10, and 11, the cut-off tool 10 also includes a vacuum attachment 124 rotatably coupled to the exhaust port 70. The vacuum attachment 124 is axially secured to the exhaust port 70 by a retaining clip 126, yet is capable of rotating relative to the exhaust port 70 by at least 180 degrees. For example, as shown in FIG. 10, the vacuum attachment 124 is in a first position. As shown in FIG. 11, the vacuum attachment 124 is in a second position in which the vacuum attachment 124 is rotated 180 degrees with respect to the vacuum attachment 124 of FIG. 10.

With continued reference to FIGS. 1, 10, and 11, the cut-off tool 10 further includes a transparent shield or cover 130 attached to the shroud 62 to cover an opening in the shroud 62 and upper blade guard 42 through which the cutting disk 24 and the arbor 22 are visible.

With reference to FIG. 3, the rotational axis 46 of the motor 16 and the arbor 22 is generally perpendicular (i.e., plus or minus about 10 degrees) to a direction of rotation of the cutting blade 24. In addition, the rotational axis 46 of the motor 16 and the arbor 22 is generally perpendicular (i.e., plus or minus about 10 degrees) to a longitudinal axis 48 (FIG. 2) of the handle portion 26.

With reference to FIGS. 1 and 2, the cutting disk 24 may have an outer diameter of about 2 inches to about 4 inches. In the illustrated embodiment, the cutting disk 24 has an outer diameter of 3 inches. As described above, the shoe 66 is pivotably attached to the shroud 62 such that the cutting depth D of the cutting disk 24 is adjustable. For example, in one embodiment of the cut-off tool 10, the cutting depth D may be adjusted to about 0.6 inches or less. In another embodiment of the cut-off tool 10, the cutting depth D may be adjusted to about 0.65 inches or less.

Various features of the invention are set forth in the following numbered clauses.
Clause 1. A cut-off tool comprising:
   a housing;
   an arbor supported by the housing for relative movement therewith;
   a cutting disk attachable to the arbor;
   a motor coupled to the arbor to provide torque thereto;
   a battery pack removably coupled to the housing for providing power to the motor; and
   a switch operable to adjust rotation of the motor between a first rotational direction and an opposite, second direction for selectively rotating the cutting disk in the first rotational direction or second rotational direction, respectively.
Clause 2. The cut-off tool of clause 1, wherein the housing includes a handle portion, and wherein the switch is positioned adjacent the handle portion.
Clause 3. The cut-off tool of clause 1, further comprising:
   a trigger for actuating the switch and selectively activating the motor; and
   a shuttle proximate the trigger for actuating the switch between a first state, in which the motor and cutting disk are driven in the first rotational direction in response to motor activation by the trigger, and a second state, in which the motor and cutting disk are driven in the second rotational direction in response to motor activation by the trigger.
Clause 4. The cut-off tool of clause 3, wherein the shuttle is movable between a plurality of positions relative to the housing, wherein a first position of the shuttle corresponds to the first rotational direction of the motor and cutting disk, and wherein a second position of the shuttle corresponds to the second rotational direction of the motor and cutting disk.
Clause 5. The cut-off tool of clause 4, wherein the shuttle is movable to a third position intermediate the first position and the second position, and wherein the third position corresponds to a lockout position of the switch in which the motor remains deactivated in response to the trigger actuating the switch.
Clause 6. The cut-off tool of clause 4, wherein the housing includes a display window, wherein the shuttle includes an indicator portion adjustably positioned within the display window, and wherein a position of the indicator portion relative to the display window indicates the rotational direction of the motor and cutting disk.
Clause 7. The cut-off tool of clause 6, wherein the display window is defined by a plurality of slots, wherein the indicator portion includes a plurality of sections positionable relative to the slots by adjustment of the shuttle, wherein one of the sections is aligned with one of the slots to indicate the first rotational direction of the motor and cutting disk, and wherein another one of the sections is aligned with another one of the slots to indicate the second rotational direction of the motor and cutting disk.
Clause 8. A cut-off tool comprising:
   a housing;
   an arbor supported by the housing for relative movement therewith;
   a cutting disk attachable to the arbor;
   a blade guard surrounding an upper portion of the cutting disk;
   a retaining clip securing the blade guard to the housing; and
   a detent mechanism between the blade guard and the retaining clip for selectively holding the blade guard in one of a plurality of positions relative to the housing.
Clause 9. The cut-off tool of clause 8, wherein the detent mechanism includes a protrusion defined on one of the retaining clip or the blade guard, and a plurality of recesses defined in the other of the retaining clip or the blade guard in which the protrusion is receivable to hold the blade guard in one of the plurality of positions relative to the housing.
Clause 10. The cut-off tool of clause 9, wherein the arbor defines a rotational axis, wherein the recesses are arranged about the rotational axis, and wherein each of the recesses corresponds to a position of the blade guard relative to the housing.
Clause 11. The cut-off tool of clause 9, wherein the retaining clip includes the protrusion, and wherein the blade guard includes the recesses.
Clause 12. The cut-off tool of clause 8, wherein the retaining clip includes a stop positioned between two edges on the blade guard, and wherein the stop is configured to engage the edges for inhibiting rotation of the blade guard about a rotational axis of the arbor.
Clause 13. The cut-off tool of clause 8, further comprising a shroud removably coupled to the blade guard, wherein the shroud includes an exhaust port through which debris created during a cutting operation is discharged.
Clause 14. The cut-off tool of clause 13, further comprising a vacuum attachment rotatably coupled to the exhaust port between a plurality of different rotational positions relative to the shroud.
Clause 15. The cut-off tool of clause 8, further comprising a shroud removably coupled to the blade guard, wherein the shroud includes
   a latch movable between a first position in which the shroud is secured to the blade guard, and a second position in which the shroud is removable from the blade guard, and
   a biasing member for biasing the latch toward the first position.
Clause 16. The cut-off tool of clause 15, further comprising a shoe pivotably coupled to the shroud for adjusting a cutting depth of the cutting disk.
Clause 17. The cut-off tool of clause 15, further comprising a cover closing an opening in the shroud and blade guard through which the cutting disk and the arbor are visible, wherein the cover is formed from a transparent material.
Clause 18. A cut-off tool comprising:
   a housing;
   an arbor supported by the housing for relative movement therewith;
   a flange coupled for co-rotation with the arbor against which a cutting disk is clamped; and
   an adapter ring coupled for co-rotation with the flange,
   wherein an outer diameter of the adapter ring is nominally less than an inner diameter of an aperture in the cutting disk for aligning the cutting disk with the arbor.
Clause 19. The cut-off tool of clause 18, wherein the adapter ring is integrally formed with the flange as a single piece.
Clause 20. The cut-off tool of clause 18, wherein the flange is a first flange, wherein the arbor further includes a second flange spaced from the first flange along a rotational axis of the arbor, and wherein the cutting disk is clamped between the first flange and the second flange.
Clause 21. The cut-off tool of clause 18, wherein the outer diameter of the adapter ring is a first outer diameter, wherein the arbor has a second outer diameter that is less than the first outer diameter, and wherein the first outer diameter corresponds to a cutting disk having the inner diameter of a first size, and the second outer diameter corresponds to a cutting disk having the inner diameter of a second size.

## Claims

1. A cut-off tool comprising:
a housing;
an arbor supported by the housing for relative movement therewith;
a cutting disk attachable to the arbor;
a blade guard surrounding an upper portion of the cutting disk;
a retaining clip securing the blade guard to the housing; and
a detent mechanism between the blade guard and the retaining clip for selectively holding the blade guard in one of a plurality of positions relative to the housing.

2. The cut-off tool of claim 1, wherein the detent mechanism includes a protrusion defined on one of the retaining clip or the blade guard, and a plurality of recesses defined in the other of the retaining clip or the blade guard in which the protrusion is receivable to hold the blade guard in one of the plurality of positions relative to the housing.

3. The cut-off tool of claim 2, wherein the arbor defines a rotational axis, wherein the recesses are arranged about the rotational axis, and wherein each of the recesses corresponds to a position of the blade guard relative to the housing.

4. The cut-off tool of claim 2, wherein the retaining clip includes the protrusion, and wherein the blade guard includes the recesses.

5. The cut-off tool of claim 1, wherein the retaining clip includes a stop positioned between two edges on the blade guard, and wherein the stop is configured to engage the edges for inhibiting rotation of the blade guard about a rotational axis of the arbor.

6. The cut-off tool of claim 1, further comprising a shroud removably coupled to the blade guard, wherein the shroud includes an exhaust port through which debris created during a cutting operation is discharged.

7. The cut-off tool of claim 6, further comprising a vacuum attachment rotatably coupled to the exhaust port between a plurality of different rotational positions relative to the shroud.

8. The cut-off tool of claim 1, further comprising a shroud removably coupled to the blade guard, wherein the shroud includes
a latch movable between a first position in which the shroud is secured to the blade guard, and a second position in which the shroud is removable from the blade guard, and
a biasing member for biasing the latch toward the first position.

9. The cut-off tool of claim 8, further comprising a shoe pivotably coupled to the shroud for adjusting a cutting depth of the cutting disk.

10. The cut-off tool of claim 8, further comprising a cover closing an opening in the shroud and blade guard through which the cutting disk and the arbor are visible, wherein the cover is formed from a transparent material.

11. A cut-off tool comprising:
a housing;
an arbor supported by the housing for relative movement therewith;
a flange coupled for co-rotation with the arbor against which a cutting disk is clamped; and
an adapter ring coupled for co-rotation with the flange,
wherein an outer diameter of the adapter ring is nominally less than an inner diameter of an aperture in the cutting disk for aligning the cutting disk with the arbor.

12. The cut-off tool of claim 11, wherein the adapter ring is integrally formed with the flange as a single piece.

13. The cut-off tool of claim 11, wherein the flange is a first flange, wherein the arbor further includes a second flange spaced from the first flange along a rotational axis of the arbor, and wherein the cutting disk is clamped between the first flange and the second flange.

14. The cut-off tool of claim 11, wherein the outer diameter of the adapter ring is a first outer diameter, wherein the arbor has a second outer diameter that is less than the first outer diameter, and wherein the first outer diameter corresponds to a cutting disk having the inner diameter of a first size, and the second outer diameter corresponds to a cutting disk having the inner diameter of a second size.
